# EUROPEAN PATENT APPLICATION

(11) **EP 1 449 582 A1**
(43) Date of publication of application: **25.08.2004**
(21) Application number: 01974722.9
(22) Date of filing: 05.10.2001
(51) Int. Cl.: B01J 35/02, C01B 33/12, C09K 3/00, C09K 3/18

(54) **TRANSPARENT THIN FILM AND METHOD FOR PRODUCTION THEREOF**

(71) Applicant: Japan Science and Technology Agency, Kawaguchi-shi, Saitama 332-0012 (JP)
(72) Inventor: MINAMI, Tsutomu, Osakasayama-shi, Osaka 589-0023 (JP); TATSUMISAGO, Masahiro, Sakai-shi, Osaka 599-8126 (JP); TADANAGA, Kiyoharu, Sakai-shi, Osaka 591-8025 (JP); MATSUDA, Atsunori, Kawachinagano-shi, Osaka 586-0082 (JP)
(74) Representative: Calamita, Roberto
(86) International application number: PCT/JP2001/008812
(87) International publication number: WO 2003/031060

(57) **Abstract**

A method for producing a transparent thin film which comprises forming a gel film containing a composite metal oxide or hydroxide of a titanium compound and a silicon alkoxide from a solution containing a silicon alkoxide and a titanium compound having hydrolizability, and subjecting the gel film to a warm water treatment, to thereby precipitate titania crystallites of anatase-type and/or of a crystal phase having a lattice spacing of about 0.7 nm on the surface of the thin film. The method can be used for producing a novel transparent thin film exhibiting high photocatalyst activity and super hydrophilicity as well as high light transparency, without the need for a high temperature treatment.

## Description

### TECHNICAL FIELD

The present invention relates to a transparent thin film and a method for producing the same. More particularly, the invention relates to a novel transparent thin film exhibiting a high photocatalytic activity and a superhydrophilicity as well as a method for producing such a transparent thin film at a low temperature.

### BACKGROUND ART

A titania is present in any of the three crystalline form, i.e., anatase type, rutile type and brookite type and also in an amorphous form, among which the anatase type of a titania is known to exhibit the highest photocatalytic activity. Also among such an anatase type of the titania, a microcrystal having a large specific surface area exhibits a photocatalytic activity higher than that of a bulk crystal. Accordingly, in the field of a photocatalyst, a material containing an anatase type titania microcrystal dispersed therein is employed for the purpose of the photolysis of an air pollutant such as acetaldehyde or nitrogen oxides, the photolysis of a water pollutant such as a halide, and the disinfecting or antibacterial effect on any hazardous microorganism, and its application is also expected.

On the other hand, among methods for producing crystalline and amorphous thin films, a sol-gel method is exemplified as a most appropriate technology since it is a process conducted at a relatively low temperature and allows any shape to be formed.

However, a thin film prepared by the sol-gel method is generally in an amorphous form, and such an amorphous thin film should be subjected to a heat treatment at 300 to 800°C in order to crystallize it. For example, in order to produce an anatase titania microcrystal, the sol-gel method is conducted first to prepare an amorphous titania thin film, which is then subjected to a heat treatment at a temperature as high as 300°C or higher. Accordingly, a poorly heat resistant material such as an organic polymer have not been able to be employed as a support, and the materials for the supports are limited.

Thus, the invention was established under the circumstance described above, and its objective is to provide a novel transparent thin film exhibiting a high photocatalytic activity and a superhydrophilicity in addition to a high light transmittance, as well as a method for producing such a transparent thin film with no need of a high temperature treatment.

### DISCLOSURE OF THE INVENTION

Accordingly, the invention provides any of the following aspects as a means for solving the problems discussed above.

Thus, as the first aspect, a transparent thin film comprising as main ingredients a silica and a titania characterized in that an anatase-type titania microcrystal is dispersed highly over the surface of the thin film is provided.

Then, as the second aspect, a transparent thin film comprising as main ingredients a silica and a titania characterized in that a titania microcrystal in a crystalline form having a lattice spacing of about 0.7 nm is dispersed highly over the surface of the thin film is provided.

In conjunction with the above-mentioned first and second aspects, the invention also provides the third aspect which is a transparent thin film characterized in that a superhydrophilicity reflected by a contact angle with water is 5° or less is exhibited, the fourth aspect which is a transparent thin film characterized in that the silica and the titania are incorporated in a molar ratio within a range of SiO₂:TiO₂=5:1 to 1:3, the fifth aspect which is a transparent thin film characterized in that the silica and the titania are incorporated in the molar ratio of SiO₂:TiO₂=3:1 and the sixth aspect which is a transparent thin film characterized in that a superhydrophilicity-superhydrophobic pattern consisting of a superhydrophilic part and a superhydrophobic part is possessed.

As the seventh aspect, the invention provides a method for producing any of the above-mentioned thin film comprising starting from a solution of a silicone alkoxide and a hydrolyzable titanium compound to form a gel film containing a composite metal oxide or hydroxide of the titanium compound and the silicon alkoxide followed by bringing into contact with water or heated water to precipitate a titania microcrystal on the surface of the thin film.

Moreover, in conjunction with the seventh aspect, the invention also provides the eighth aspect which is a method for producing a transparent thin film wherein said hydrolyzable titanium compound is a titanium alkoxide, the ninth aspect which is a transparent thin film wherein the silicon alkoxide and the titanium compound are incorporated in a molar ratio within a range of SiO₂:TiO₂=5:1 to 1:3, the tenth aspect which is a method for producing a transparent thin film wherein the silicon alkoxide and the titanium compound are incorporated in the molar ratio of SiO₂:TiO₂=3:1 and the eleventh aspect which is a method for producing a transparent thin film characterized in that a fluoroalkylsilane was coated on the transparent thin film, and irradiated with an ultraviolet light via a photomask to form a superhydrophilicity-superhydrophobic pattern on the transparent thin film.

### BRIEF DESCRIPTION OF THE DRAWINGS

Figure 1 shows a graph of the change in the concentration of methylene blue upon irradiation of an inventive transparent thin film with an ultraviolet light.
Figure 2 shows the change in the concentration of methylene blue upon irradiation of an inventive transparent thin film (a), non heated water-treated transparent thin film (x) and a conventional anatase-type titania thin film (y) with an ultraviolet light.
Figure 3 shows an FE-SEM image as a perspective view of any of inventive transparent thin films (a) to (d).

### BEST MODE FOR CARRYING OUT THE INVENTION

While the invention has the characteristics described above, its embodiments are described below.

A transparent thin film according to the first and the second aspects of the invention is a transparent thin film comprising as main ingredients a silica and a titania and characterized in that an anatase-type titania microcrystal or a titania microcrystal in a crystalline form having a lattice spacing of about 0.7 nm, or a titania microcrystal having the both crystalline phase is dispersed highly over the surface of the thin film.

A crystalline phase having a lattice spacing of about 0.7 nm other than that of an anatase type has not been known, and is contained characteristically in an inventive titania microcrystal.

As used herein, the expression "dispersed highly" means that the titania microcrystal gives a markedly irregular surface of a film, generally to a level allowing the titania microcrystal to occupy 30 % or more, especially 50 % or more of the surface area of the film which has been brought into contact with water or heated water as described below.

An inventive transparent thin film has a high light transmittance and also has a durability. Throughout the surface of this transparent thin film, a titania exhibiting a high photocatalytic activity described above is dispersed highly as a microcrystal. The titania microcrystal has a particle size of several 10 to 1000 nm, and has a large specific surface area. As a result, the inventive transparent thin film exhibits an extremely high photocatalytic activity. Also since it can be produced at a temperature as low as 100°C or below, it can be formed directly on various materials.

A transparent thin film as the third aspect of the invention is characterized in that a superhydrophilicity reflected by a contact angle with water is 5° or less is exhibited in conjunction with the above mentioned first and second aspects.

An inventive transparent thin film has a titania mycrocrystal as being dispersed highly thereon, and its film surface is imparted with a fine irregular matrix, which is smaller sufficiently than a light wavelength and imparts the thin film with a transparency and a visually advantageous appearance, and it also exhibits a self-cleaning ability because of a superhydrophilicity reflected by a contact angle with water is 5° or less.

In a transparent thin film as the fourth aspect of the invention, the silica and the titania can be incorporated in any molar ratio within a wide range of SiO₂:TiO₂=5:1 to 1:3. Accordingly, a novel transparent thin film exhibiting a high photocatalytic activity and a superhydrophilicity in addition to a high light transmittance can be provided.

A transparent thin film as the fifth aspect of the invention is characterized in that the silica and the titania are incorporated in the molar ratio of SiO₂:TiO₂=3:1. A ratio of or around SiO₂:TiO₂=3:1 serves to further increase the photocatalytic activity.

A transparent thin film as the 6th aspect of the invention is characterized in that a superhydrophilicity-superhydrophobic pattern consisting of a superhydrophilic part and a superhydrophobic part is possessed in the fifth aspect of the invention. The superhydrophobic part can be obtained by forming a hydrophobic film on the transparent thin film of the invention. The hydrophobic film and the superhydrophilicity-superhydrophobic pattern may be any desired pattern.

It is also possible to bring a hydrophilic fluid into contact with the surface of an inventive transparent thin film to allow the hydrophilic fluid to be located only on the superhydrophilic part and to be solidified, whereby obtaining a swollen pattern of a desired shape.

A method for producing a transparent thin film provided as the 7th aspect of the invention is a method for producing a transparent thin film described above, and comprises starting from a solution of a silicone alkoxide and a hydrolyzable titanium compound to form a gel film containing a composite metal oxide or hydroxide of the titanium compound and the silicon alkoxide followed by bringing said gel film into contact with water or heated water to precipitate a titania microcrystal on the surface of the thin film.

In this method, a silicon alkoxide as a starting material may be any of various materials represented by Formula: Si(OR)₄. Each organic group R as a constituent of the alkoxyl group may for example be a same or different lower alkyl group having 1 to 6 carbon atoms, such as methyl group, ethyl group, propyl group, isopropyl group, butyl group, isobutyl group and the like. Typically, silicon tetraethoxide is employed preferably.

The silicon alkoxide is dissolved in an organic solvent to prepare a silicon alkoxide solution. Upon this, a catalyst for promoting the hydrolysis of the alkoxyl group or promoting the dehydration condensation reaction and water may be added if desired. The molar ratios of the organic solvent and water to be added to the silicon alkoxide are preferably 1 to 8 and 1 to 6, respectively.

An organic solvent may for example be methanol, ethanol, 1-propanol, isopropyl alcohol, 1-butanol, 2-butanol, isobutyl alcohol, t-butyl alcohol, 1-pentanol, 2-pentanol, 3-pentanol and the like.

A catalyst may for example be nitric acid, hydrochloric acid, sulfuric acid, phosphoric acid, acefic acid, ammonia and the like.

A hydrolyzable titanium compound as a starting material may for example be an metal organic compound titanium alkoxide, titanium oxalate, a metal inorganic compound titanium nitrate, titanium tetrachloride and the like, with a titanium alkoxide being employed preferably. Such a titanium alkoxide may for example be tetramethoxytitanium, tetraethoxytitanium, tetra-n-propoxytitanium, tetraisopropoxytitanium, tetra-n-butoxytitanium, tetraisobutoxytitanium and the like.

A titanium compound is also dissolved in an organic solvent described above to prepare a titanium solution. The molar ratio of the organic solvent to be added to a titanium compound is preferably about 20.

A silicon alkoxide solution and a titanium solution thus prepared are mixed to form a gel film containing a composite metal oxide or hydroxide of the titanium compound and the silicon alkoxide. The silicon alkoxide and the titanium compound are incorporated in a molar ratio within a range of SiO₂:TiO₂=5:1 to 1:3 as described above, more preferably around 3:1. A molar ratio of the silicon alkoxide and the titanium compound of about 3:1 serves to further increase the photocatalytic activity of the inventive transparent thin film.

A gel film can be formed on a support made from various materials. A support may be made from any of various glass materials, metal materials, inorganic materials, plastic materials, papers and woody materials. The method for the application onto the support may be any of various methods such as dip coating, spray coating, spin coating and the like.

In an inventive method, such a gel film may be treated with water or heated water to precipitate a titania microcrystal as described above on the surface of the thin film. It is preferable especially to use as a heated water, whose temperature is 100°C or below, for example 50 to 100°C. The treatment time when using a heated water may vary depending on the temperature of the heated water, and about 1 hour is sufficient when using a boiling water.

A titania microcrystal described above precipitated by the heated water treatment described above consists of a titania microcrystal of an anatase type or in a crystalline form having a lattice spacing of about 0.7 nm or the both, and forms a irregular matrix on the surface of the transparent thin film. As a result, this transparent thin film exhibits a superhydrophilicity reflected by a contact angle with water is 5° or less. Accordingly, a transparent thin film exhibiting a high photocatalytic activity and a superhydrophilicity in addition to a high light transmittance can be produced with no need of a high temperature treatment.

An inventive method is an extremely effective technology in a practical use of a titania photocatalyst, since it can be conducted at a temperature as low as 100°C or lower and allows a transparent anatase thin film to be formed even on a poorly heat resistant support.

A method for producing a transparent thin film provided as the tenth aspect of the invention is characterized in that a fluoroalkylsilane was coated on the transparent thin film, and irradiated with an ultraviolet light via a photomask to form a superhydrophilicity-superhydrophobic pattern on the transparent thin film.

A fluoroalkylsilane can be employed as a hydrophobic film material. The fluoroalkylsilane may for example be a homopolymerization condensation compound of 3,3,3-trifluoropropyltrialkoxysilane, more typically 3,3,3-trifluoropropyltrimethoxysilane or 3,3,3-trifluoropropyltriethoxysilane and the like. Its oligomer or a polymerization condensation product obtained from such an oligomer may also be employed. A method for applying a fluoroalkoxysilane onto a transparent thin film may be any ordinary method such as a solution coating or vapor deposition.

A photomask may be any of various commercially available photomasks employed usually depending on the purpose of use. For example, a metal mesh mask having an opening formed in a metal such as gold, silver, copper, stainless steel, chromium, titanium, aluminum and the like.

A fluoroalkylsilane-coated transparent thin film is then irradiated with an ultraviolet light via a photomask having a desired pattern as an opening. Thus, the transparent thin film part aligned with the opening of the photomask is irradiated with the ultraviolet light. Accordingly, a titania microcrystal of an anatase type or in a crystalline form having a lattice spacing of about 0.7 nm on the surface of the transparent thin film part irradiated with the ultraviolet light exerts a photocatalytic effect, whereby decomposing the fluoroalkylsilane on the transparent thin film. As a result, the part irradiated with the ultraviolet light exhibits a superhydrophilicity, while the masked part shield from the ultraviolet light exhibits a superhydrophobicity, resulting in the formation of the superhydrophilicity-superhydrophobic pattern.

Utilizing this pattern, a swollen pattern of a desired shape can be produced for example on the basis of the difference in the solid surface energy. By forming such a swollen pattern of a desired shape on a support, a microlense and other micro optical elements such as those having focusing, filtering and multiplexing functions such as a waveguide can be produced. It can be applied also to a printing plate.

The invention is further detailed in the following Examples.

### EXAMPLE

### (EXAMPLE 1)

Using titanium (IV) tetra-n-butoxide [Ti(O-n-Bu)₄] as a titanium compound and silicon exthoxide [Si(OEt)₄] as a silicon alkoxide, a transparent thin film was produced by the following procedure.

First, the silicon triethoxide was supplemented with 3.6% by weight of hydrochloric acid as a catalyst, and combined with ethanol and water in the ratio represented by Si(OEt)₄:EtOH:H₂O=1:5:4, and then stirred for 30 minutes at room temperature. This solution was mixed at various concentrations with a solution of the titanium (IV) tetra-n-butoxide dissolved in ethanol in the ratio represented by Ti(O-n-Bu)₄:EtOH=1:2 to obtain sol solutions.

The solution was mixed so that the four concentrations, namely, SiO₂:TiO₂=(a)5:1, (b)3:1, (c)1:1 and (d)1:3 were obtained.

Any of these sol solution was coated onto the surface of an inorganic alkaline glass support by a dip coating method, and heated for 1 hour at 90°C to obtain a thin film. The thin film was then treated with a heated water for 1 hour at 100°C to obtain SiO₂:TiO₂ transparent thin films (a) to (d).

### <1> The photocatalytic activity of the resultant transparent thin films (a) to (d) was evaluated as described below.

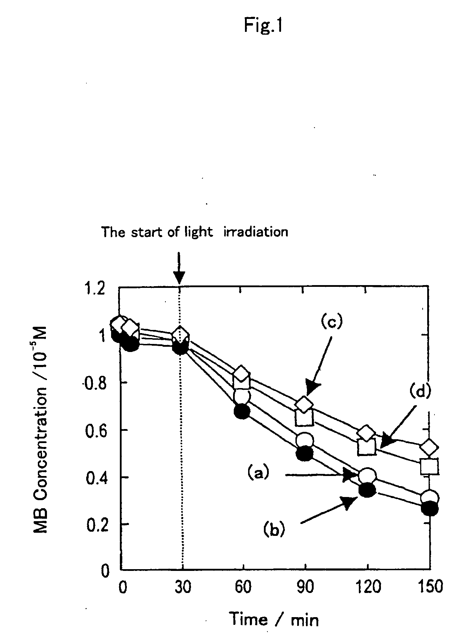

A support onto which each of the transparent thin films (a) to (d) had been coated over 1.0 cm² was inserted into a Pyrex optical cell containing 2.0 g of a 1 x 10⁻⁵ M aqueous solution of methylene blue (MB), and the change in the concentration of the MB aqueous solution in the cell upon irradiation of the transparent thin film with the ultraviolet light at 67 mW/cm² was measured by an ultraviolet visual absorption spectroscopy. The irradiation of the ultraviolet light was initiated 30 minutes after the initiation of the measurement of the change in the concentration of the MB aqueous solution. The results are shown in Figure 1.

As evident from Figure 1, all cells exhibited a rapid reduction in the concentration of the MB aqueous solution after initiation of the UV irradiation. Thus, each of these transparent thin films (a) to (d) was proven to have a photocatalytic activity which decomposes MB in response to the UV irradiation.

It was also proven that this photocatalytic activity became the highest in the transparent thin film (b).

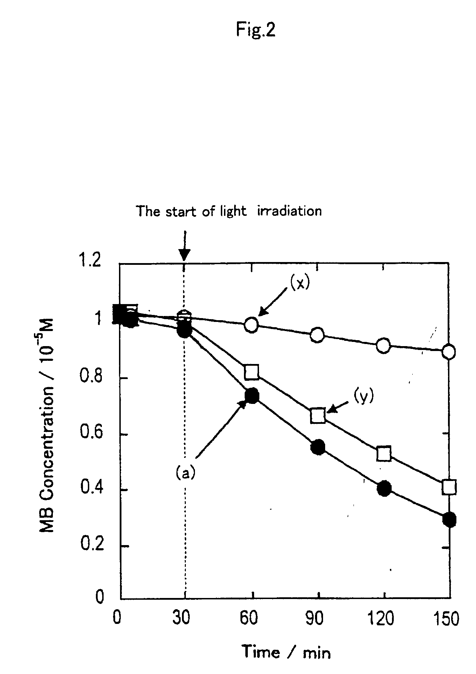

For comparison, anatase-type titania thin films starting only from (x) a non heated water-treated transparent thin film and (y) Ti(O-n-Bu)₄ and sintered for 1 hour at 500°C were subjected to the similar evaluation for the photocatalytic activity without a heated water treatment. The results are shown in Figure 2.

As evident from Figure 2, a thin film which had not been treated with a heated water was proven to exhibit almost no photocatalytic activity. It was also proven that the treatment with a heated water serves to yield a transparent thin film whose photocatalytic activity is higher than that of an anatase-type titania obtained by a conventional sintering.

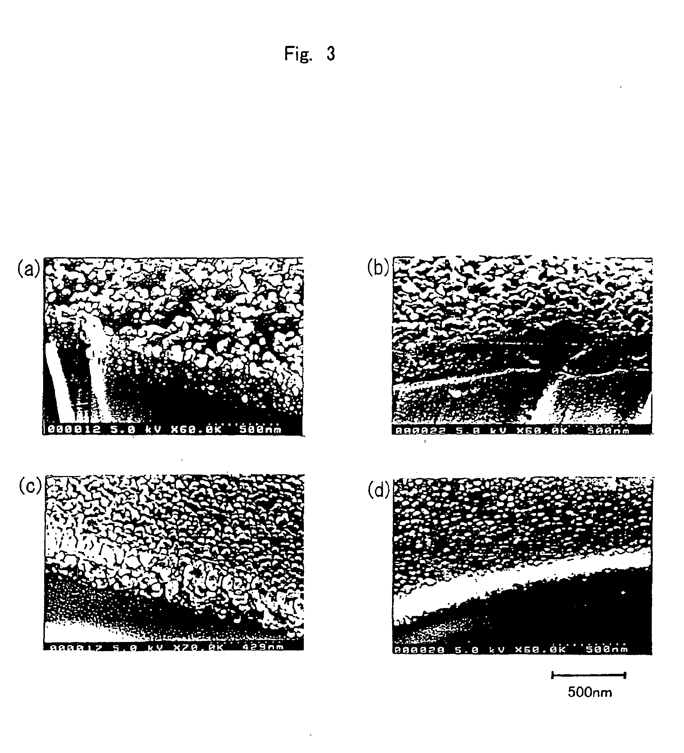

### <II> The surface of each of the transparent thin films (a) to (d) was observed perspectively using a field emission scanning electron microscope (FE-SEM). Figure 3 shows an FE-SEM image.

Based on Figure 3 and the results of the field emission scanning electron microscopy, the surface of each of the transparent thin films (a) to (d) was imparted with a fine irregularity attributable to the anatase crystal precipitated by the heated water treatment and also to the titania in a crystalline phase having a lattice spacing of about 0.7 nm. Especially in the transparent thin film (b), a fine irregular matrix analogous to a flower petal-like Ai₂O₃, was formed, indicating not only a high photocatalytic activity but also of the possibility of being used as superhydrophilic and superhydrophobic thin films.

### (EXAMPLE 2)

The transparent thin films (1) to (8) prepared similarly to EXAMPLE 1 but using the ratios of the silica and the titania shown in Table 1 were examined for the contact angle with water.

The measurement of the contact angle was conducted for a thin film itself in the 1st time, for a fluoroalkylsilane-coated thin film in the 2nd time, and for an UV-irradiated thin film in the 3rd time.

The results are included in Table 1.

**Table 1**

| No. | 1 | 2 | 3 | 4 | 5 | 6 | 7 | 8 |
|---|---|---|---|---|---|---|---|---|
| TiO₂ % by mole | 0 | 9 | 16.5 | 25 | 33 | 50 | 75 | 100 |
| 1st time | <5° | <5° | <5° | <5° | <5° | <5° | <5° | <5° |
| 2nd time | 108° | 120° | 123° | 145° | 138° | 116° | 115° | 110° |
| 3rd time | 108° | <5° | <5° | <5° | <5° | <5° | <5° | <5° |

As evident from Table 1, each of the inventive transparent thin films (2) to (7) was proven to exhibit a superhydrophilicity reflected by a contact angle with water of 5° or less.

All transparent thin films were revealed to exhibit a hydrophobicity as a result of the coating with the fluoroalkylsilane. A superhydrophobicity reflected by the contact angle of 145° was identified especially in the transparent thin film (4) having SiO₂:TiO₂=3:1.

Each of the transparent thin films (2) to (8) exhibiting the photocatalytic activity was revealed to exhibit a superhydrophilicity again after the UV irradiation. Accordingly, each of the transparent thin films (2) to (8) was proven to be capable of decomposing the fluoroalkylsilane in response to the UV irradiation.

It is a matter of course that the invention is not limited to the examples described above, and various modifications can be made in its details.

### INDUSTRIAL APPLICABILITY

As detailed above, the invention provides a novel transparent thin film exhibiting a high photocatalytic activity and a superhydrophilicity and a method for producing such a transparent thin film at a low temperature.

## Claims

1. A transparent thin film comprising as main ingredients a silica and a titania **characterized in that** an anatase-type titania microcrystal is dispersed highly over the surface of the thin film.

2. A transparent thin film comprising as main ingredients a silica and a titania **characterized in that** a titania microcrystal in a crystalline form having a lattice spacing of about 0.7 nm is dispersed highly over the surface of the thin film.

3. A transparent thin film according to Claim 1 or 2 **characterized in that** a superhydrophilicity reflected by a contact angle with water is 5° or less is exhibited.

4. A transparent thin film according to any of Claims 1 to 3 **characterized in that** the silica and the titania are incorporated in a molar ratio within a range of SiO₂:TiO₂=5:1 to 1:3.

5. A transparent thin film according to any of Claims 1 to 4 **characterized in that** the silica and the titania are incorporated in the molar ratio of SiO₂:TiO₂=3:1.

6. A transparent thin film according to Claim 5 **characterized in that** a superhydrophilicity-superhydrophobic pattern consisting of a superhydrophilic part and a superhydrophobic part is possessed.

7. A transparent thin film according to Claim 6 **characterized in that** the superhydrophobic part consists of a fluoroalkylsilane.

8. A method for producing a transparent thin film according to any of Claims 1 to 7 comprising starting from a solution of a silicone alkoxide and a hydrolyzable titanium compound to form a gel film containing a composite metal oxide or hydroxide of the titanium compound and the silicon alkoxide followed by bringing into contact with water or heated water to precipitate a titania microcrystal on the surface of the thin film.

9. A method for producing a transparent thin film according to Claim 8 wherein said silicon alkoxide is silicon tetraethoxide.

10. A method for producing a transparent thin film according to Claim 8 or 9 wherein said hydrolyzable titanium compound is a titanium alkoxide.

11. A method for producing a transparent thin film according to any of Claims 8 to 10 wherein the silicon alkoxide and the titanium compound are incorporated in a molar ratio within a range of SiO₂:TiO₂=5:1 to 1:3.

12. A method for producing a transparent thin film according to any of Claims 8 to 11 wherein the silicon alkoxide and the titanium compound are incorporated in the molar ratio of SiO₂:TiO₂=3:1.

13. A method for producing a transparent thin film according to any of Claims 8 to 12 involving a contact with a heated water at 50 to 100°C.

14. A method for producing a transparent thin film according to any of Claims 8 to 12 **characterized in that** a fluoroalkylsilane was coated on the transparent thin film, and irradiated with an ultraviolet light via a photomask to form a superhydrophilicity-superhydrophobic pattern on the transparent thin film.
